(19) Europäisches Patentamt
European Patent Office
Office européen des brevets

(11) Veröffentlichungsnummer: **0 372 295 B1**

(12) **EUROPÄISCHE PATENTSCHRIFT**

(45) Veröffentlichungstag der Patentschrift: **19.05.93**

(51) Int. Cl.5: **C08F 8/30**, C08F 8/44, C09J 123/36, C09J 133/00, C09D 123/36, C09D 133/00

(21) Anmeldenummer: **89121582.4**

(22) Anmeldetag: **22.11.89**

(54) **Wässrige Lösungen oder Dispersionen von selbstvernetzenden Bindemitteln, ein Verfahren zu ihrer Herstellung und ihre Verwendung.**

(30) Priorität: **06.12.88 DE 3841021**

(43) Veröffentlichungstag der Anmeldung:
**13.06.90 Patentblatt 90/24**

(45) Bekanntmachung des Hinweises auf die Patenterteilung:
**19.05.93 Patentblatt 93/20**

(84) Benannte Vertragsstaaten:
**AT BE CH DE ES FR GB IT LI NL SE**

(56) Entgegenhaltungen:
**EP-A- 0 218 906**
**GB-A- 989 050**

(73) Patentinhaber: **BAYER AG**

**W-5090 Leverkusen 1 Bayerwerk(DE)**

(72) Erfinder: **Blum, Harald, Dr.**
**Auf dem Westkamp 1**
**W-4175 Wachtendonk(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft neue, wäßrige Lösungen oder Dispersionen von selbstvernetzenden Bindemitteln auf Basis von ionisch modifizierten Polycarbonsäure-Polyanhydriden, ein Verfahren zu ihrer Herstellung durch eine zweistufige Modifizierungsreaktion der genannten Polyanhydride und ihre Verwendung als Beschichtungsmittel oder Klebstoff bzw. zur Herstellung von Beschichtungsmitteln oder Klebstoffen.

Wäßrige Anstrichsysteme auf Basis von wasserverdünnbaren bzw. -löslichen Einbrennbindemitteln haben den Vorteil, daß sie nur geringe Mengen organischer Lösemittel enthalten, welche beim Aushärten verloren gehen und die Umwelt belasten bzw. aufwendige Absorptions- oder Verbrennungsanlagen erfordern. Die Löslichkeit dieser Bindemittel in Wasser ist im allgemeinen auf das Vorliegen von chemisch eingebauten, mit Aminen neutralisierten Säuregruppen, insbesondere Carboxylgruppen bzw. von chemisch eingebauten mit Säuren neutralisierten tertiären Aminogruppen zurückzuführen (vgl. z. B. DE-OS 2 749 692, EP-A-218 906 oder L. Dulog, Die Angew. Makro. Chemie 123/124 (1984), S. 437 ff).

Bei der Aushärtung von Überzügen, die solche Bindemittel enthalten, werden die flüchtigen Neutralisationsmittel wieder abgespalten und die Filme dadurch wasserunlöslich.
Werden gewisse Anforderungen an die Qualität der Überzüge gestellt, wie z. B. eine hohe Lösemittelbeständigkeit, so erfolgt die Aushärtung üblicherweise mit Hilfe von Vernetzerharzen bei erhöhten Temperaturen. Solche Vernetzerharze nach dem Stand der Technik sind z. B. veretherte Melaminharze oder auch blockierte Polyisocyanate (z. B. Wagner/Sarx, Lack-Kunstharze, Carl Hanser Verlag München 1971, S. 71 ff und S. 161 ff).

All diesen Vernetzerharzen ist gemeinsam, daß bei den Vernetzungsreaktionen niedermolekulare flüchtige Spaltprodukte entstehen, die nicht in die Überzüge mit eingebaut werden (Journal of Paint Technology 46, Nr. 593 (1974), S. 46 ff; Progress in Org. Coatings 12, (1984), S. 309 ff).

Aufgabe der Erfindung war daher die Entwicklung von wasserverdünnbaren bzw. wasserlöslichen Bindemitteln, die möglichst wenig, bevorzugt kein organisches Hilfslösemittel aufweisen, keine flüchtigen Neutralisationsmittel oder Emulgier- bzw. Dispergierhilfsmittel enthalten und ohne Zusatz von Vernetzerharzen durch Wärmebehandlung abspalterfrei in den vernetzten Zustand überführt werden können, wobei die wäßrigen Lösungen oder Dispersionen der Bindemittel lagerstabeil sein und die daraus hergestellten Überzüge eine hohe Wasser- bzw. Lösemittelbeständigkeit aufweisen müssen.

Diese Aufgabe konnte mit der Bereitstellung der nachstehend näher beschriebenen erfindungsgemäßen wäßrigen Lösungen oder Dispersionen bzw. des Verfahrens zu ihrer Herstellung gelöst werden. Im Falle der Abwesenheit der nicht zwingend erforderlichen organischen Lösungsmittel stellen die erfindungsgemäßen Lösungen oder Dispersionen Bindemittelsysteme dar, die bei der Verarbeitung und anschließender Auswertung durch Einbrennen ausschließlich Wasser an die Umwelt abgeben.

Gegenstand der Erfindung sind wäßrige Lösungen oder Dispersionen von selbstvernetzenden Bindemitteln auf Basis von ionisch modifizierten Polycarbonsäure-Polyanhydriden, dadurch gekennzeichnet, daß die in Wasser gelöst oder dispergiert vorliegenden Bindemittel

a) einen Gehalt an seitenständig angeordneten Carbonsäureester-, Carbonsäurethioester- und/oder Carbonsäureamidgruppen von bis zu 500 Milliäquivalenten pro 100 g Feststoff,

b) einen Gehalt an chemisch eingebauten, covalent gebundenen Carboxylatgruppen von 10 bis 500 Milliäquivalenten pro 100 g Feststoff

und

c) ein Gehalt an Ammoniumgruppen von 10 bis 500 Milliäquivalenten pro 100 g Feststoff

aufweisen.

Gegenstand der vorliegenden Erfindung ist auch ein Verfahren zur Herstellung dieser Lösungen oder Dispersionen, welches dadurch gekennzeichnet ist, daß man
in einem ersten Reaktionsschritt intramolekulare Carbonsäureanhydridgruppen aufweisende Polyanhydride A), gegebenenfalls in Gegenwart von inerten Lösungsmitteln, mit, unter dem Einfluß von wasseraktivierbaren, blockierten Aminen B), die neben den blockierten Aminogruppen mindestens eine gegenüber Säureanhydridgruppen reaktionsfähige Hydroxy-, Mercapto-oder Aminogruppe aufweisen, unter Einhaltung eines Molverhältnisses von Säureanhydridgruppen zu gegenüber Säureanhydridgruppen reaktionsfähigen Gruppen von 10 : 1 bis 0,8 : 1 im Sinne einer unter Ringöffnung ablaufenden Ester-, Thioester- oder Amidbildungsreaktion zumindest teilweise zur Reaktion bringt und
in einem zweiten Reaktionsschritt das so erhaltene Reaktionsgemisch mit Wasser verdünnt und bei Raumtemperatur bzw. gegebenenfalls erhöhter Temperatur so lange rührt, bis eine stabile wäßrige Lösung oder Dispersion entsteht, wobei gegebenenfalls vorliegende flüchtige organische Bestandteile des Gemisches gegebenenfalls gleichzeitig abdestilliert werden.

Gegenstand der Erfindung ist schließlich auch die Verwendung der erfindungsgemäßen Lösungen oder Dispersionen als wäßrige Beschichtungsmittel oder Klebstoffe oder zur Herstellung von wäßrigen Beschichtungsmitteln oder Klebstoffen.

Als Polyanhydride A) können niedermolekulare cyclische Dianhydride wie z. B. Pyromellithsäuredianhydrid oder Benzophenon-3,3'-4,4'-tetracarbonsäuredianhydrid eingesetzt werden.

Ebenfalls geeignet sind mindestens zwei Anhydridgruppen enthaltende Umsetzungsprodukte von mindestens difunktionellen Alkoholen, Aminen oder Aminoalkoholen mit überschüssigen Mengen Dianhydriden.

Ebenfalls geeignet sind Propfprodukte, Diels-Alder-Addukte oder En-Addukte van Maleinsäureanhydrid und mehrfach ungesättigten Substanzen wie z. B. flüssige niedermolekulare Polybutadiene, Butadiencopolymerisate, Sojaöl, Leinöl, Holzöl, Tallöl, Ricinusöl, Kokosöl, Erdnußöl, Sonnenblumenöl, Baumwollsaatöl.

Vorzugsweise handelt es sich bei der Komponente A) jedoch um intramolekulare Säureanhydridgruppen enthaltende Copolymerisate von

a) 0,1 bis 45 Gew.-Teilen Maleinsäureanhydrid,

b) 0 bis 95 Gew.-Teilen Monomeren der Formel

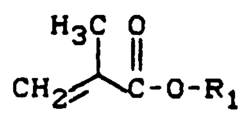

und/oder der Formel

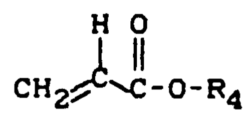

c) 0 bis 95 Gew.-Teilen Monomeren der Formel

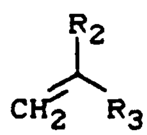

d) 0 bis 10 Gew.-Teilen mehrfach ungesättigten copolymerisierbaren Verbindungen,

wobei in den genannten Formeln

- $R_1$ für einen aliphatischen oder cycloaliphatischen, gegebenenfalls Sauerstoff, Schwefel oder Stickstoff als Heteroatom enthaltenden Kohlenwasserstoffrest mit 1 bis 12 Kohlenstoffatomen steht,
- $R_2$ für Wasserstoff, eine Methyl- oder Ethylgruppe oder für Chlor oder Fluor steht,
- $R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam-oder Lactongruppen enthält, steht, und
- $R_4$ bezüglich seiner Bedeutung der für $R_1$ gemachten Definition entspricht.

Die Komponente A) besteht somit vorzugsweise aus Copolymerisaten von Maleinsäureanhydrid mit Monomeren der oben unter b), c) und d) genannten Art.

Bevorzugte Monomere b) und c) sind solche der obengenannten allgemeinen Formeln, für welche

- $R_1$ für einen linearen oder verzweigten aliphatischen Kohlenwasserstoffrest mit 1 bis 8 Kohlenstoffatomen steht,
- $R_2$ für Wasserstoff oder eine Methylgruppe steht,

$R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht, und

$R_4$ bezüglich seiner Bedeutung der zuletzt für $R_1$ gemachten Definition entspricht.

Typische Beispiele für geeignete bzw, bevorzugte Reste $R_1$ bzw. $R_4$ sind Methyl-, Ethyl-, n-Propyl, Isopropyl-, n-Butyl-, Isobutyl-, n-Pentyl-, n-Hexyl-, 2-Ethylhexyl-, n-Octyl-, n-Decyl- oder n-Dodecylreste.

Typische Beispiele für geeignete bzw. bevorzugte Reste $R_2$ sind Wasserstoff-, Methyl-, Ethyl-, Chlor- oder Fluor-.

Typische Beispiele für geeignete bzw. bevorzugte Reste $R_3$ sind aliphatische Reste der soeben für $R_1$ beispielhaft genannten Art mit Ausnahme von Wasserstoff und Methyl und außerdem Phenyl-, Cyclohexyl-, 2-, 3- und 4-Methylphenyl-, Propoxy-, n-Butoxy-, Acetyl-, Propionyl-, n-Butyryl- oder N-Methoxymethyl-aminocarbonyl-Reste.

Bevorzugte mehrfach ungesättigte copolymerisierbare Verbindungen d) sind z.B. 1,6-Hexandiolbisacrylsäureester, Trimethylolpropanbisacrylsäureester, Trimethylolpropantrisacrylsäureester, Pentaerythrittrisacrylsäureester, Divinylbenzol, Umsetzungsprodukte von mindestens difunktionellen Isocyanaten mit äquivalenten Mengen Hydroxyalkyl(meth)acrylsäureester, oligomere Butadienhomo- bzw. -copolymerisate wie sie z.B. in der DE-AS 1 186 831, in der US-PS 3 789 040 oder in "Makromolekül" von H.G. Elias, 4. Auflage, Hüthig und Wepf-Verlag, Basel, Heidelberg, New York, S. 676, 744 bis 746, 1012 ff. beschrieben sind, wobei die Butadienhomo- bzw. -copolymerisate üblicherweise ein als Zahlenmittel bestimmtes Molekulargewicht von 500 bis 3000, eine Iodzahl nach Wijs von 300 bis 500 g Iod/g Substanz besitzen, gegebenenfalls bis zu 50 %, bezogen auf Gemisch, an anderen Comonomeren, wie z.B. den oben beispielhaft genannten, enthalten und gegebenenfalls funktionelle Gruppen wie z.B. Hydroxyl- und Carboxylgruppen tragen können.

Bevorzugte Komponenten A) sind solche, in denen

a) 2 bis 35 Gew.-Teile, vorzugsweise 3 bis 19 Gew.-Teile Maleinsäureanhydrid,

b) 10 bis 80 Gew.-Teile, insbesondere 35 bis 80 Gew.-Teile an Monomeren der Formeln

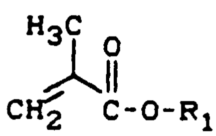

und/oder

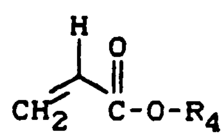

und

c) 5 bis 70 Gew.-Teile, insbesondere 10 bis 50 Gew.-Teile an Monomeren der Formel

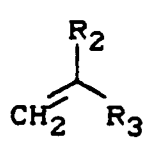

und

d) 0 bis 10 Gew.-Teile, insbesondere 0 bis 5 Gew.-Teile mehrfach ungesättigter copolymerisierbarer Substanzen,

in copolymerisierter Form vorliegen.

Besonders bevorzugt werden als Komponente A) solche der gemachten Definition entsprechende Copolymerisate eingesetzt, in denen pro 100 Gew.-Teilen Maleinsäureanhydrid 40 bis 140 Gew.-Teile an anderen Monomeren ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, gegebenenfalls neben anderen Comonomeren enthält.

Die Komponente A), d.h. die bernsteinsäureanhydridhaltigen Copolymerisate weisen im allgemeinen ein als Gewichtsmittel bestimmtes, nach der Gelpermeationschromatographie ermittelbares Molekulargewicht von 1500 bis 200 000, vorzugsweise von 2500 bis 100 000 und ganz besonders bevorzugt von 5000 bis 35 000, auf. Ihr Anhydridäquivalentgewicht (= Menge in "g", die 1 Mol Anhydridgruppen enthält) liegt bei 9800 bis 217, vorzugsweise bei 2400 bis 326. Die genannten Molekulargewichte können beispielsweise nach der Methode der Gelpermeationschromatographie ermittelt werden.

Sie werden in an sich bekannter Weise durch eine radikalisch initiierte Copolymerisation, vorzugsweise in Anwesenheit von organischen Lösungsmitteln, hergestellt.

Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Geeignet sind beispielsweise Ester wie Ethylacetat, Propylacetat, Butylacetat, Isopropylacetat, Isobutylacetat, sec.-Butylacetat, Amylacetat, Hexylacetat, Benzylacetat, Ethylpropionat, Butylpropionat, Methylglykolacetat, Ethylglykolacetat, Butylglykolacetat, Ethyldiglykolacetat, Ethylglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Benzin, Terpentinöl, Solventnaphtha, Terpene, Hexan, Heptan, Octan, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösungsmittel.

Die Copolymerisation wird üblicherweise bei Feststoffgehalten von 30 bis 95 Gew.-% oder auch in Abwesenheit von Lösungsmitteln durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 % beendet. Gegebenenfalls ist es erforderlich durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Maleinsäureanhydridrestmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomerenmischung, wie z.B. Styrol, Butylacrylat, zu reduzieren.

Es ist auch möglich einen Teil des Maleinsäureanhydrids mit dem Lösungsmittel vorzulegen, oder das Maleinsäureanhydrid schneller als die anderen Monomeren zuzutropfen. Diese geänderten Herstellverfahren können in gewissen Fällen die Verträglichkeit der Komponenten der Bindemittelkombination verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für Reaktionstemperaturen von 60 bis 180 °C geeignet sind, wie organische Peroxide, z.B.: Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2'-Azobis-(2,4-dimethylvaleronitril), 2,2'-Azobis-(isobutyronitril), 2,2'-Azobis-(2,3-dimethylbutyronitril), 1,1'-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan, Mercaptoethanol usw. in Mengen von 0 bis 10 Gew.-% eingesetzt werden.

Bei den blockierten Aminen B) handelt es sich um Verbindungen, die neben mindestens einer gegenüber Säureanhydridgruppen reaktionsfähigen Gruppe mindestens eine "blockierte Aminogruppe" aufweisen. Unter "blockierten Aminogruppen" sind in diesem Zusammenhang Stickstoff aufweisende Gruppierungen zu verstehen, die gegenüber Säureanhydridgruppen inert sind, jedoch unter dem Einfluß von Wasser das Blockierungsmittel abspalten und in N-H-Bindungen aufweisende Gruppierungen überführt werden.

Gut geeignete blockierte Amine B) sind Verbindungen, die neben mindestens einer Hydroxy-, Mercapto- oder primärer bzw. sekundärer Aminogruppe mindestens eine Gruppierung der Formel

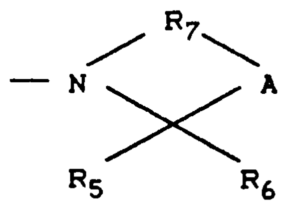

aufweisen, wobei

A für $-O-$, $-S-$ oder $-NR_4-$ ($R_4 = C_1-C_6$-Alkyl) steht,

$R_5$ und $R_6$ für gleiche oder verschiedene Reste stehen und Wasserstoff oder beliebige inerte organische Reste, vorzugsweise aliphatische Kohlenwasserstoffreste mit 1 bis 18, vorzugsweise 4 bis 10 Kohlenstoffatomen, bedeuten, oder wobei die Reste $R_5$ und $R_6$ zusammen mit dem Kohlenstoffatom des heterocyclischen Rings einen cycloaliphatischen Ring mit insgesamt 4 bis 9 Kohlenstoffatomen, insbesondere einen Cyclohexanring bilden, mit der Maßgabe, daß höchstens einer der Reste $R_5$ oder $R_6$ für Wasserstoff steht und

$R_7$ für einen Alkylenrest mit 2 bis 6 Kohlenstoffatomen steht.

Zu den bevorzugten "blockierten Aminen" gehören Verbindungen der Formel

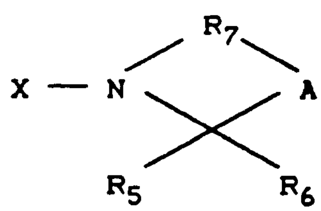

für welche

A, $R_5$, $R_6$ und $R_7$ die soeben genannte Bedeutung bzw. bevorzugte Bedeutung haben und

X für Wasserstoff oder einen Hydroxyalkyl-, Mercaptoalkyl- oder (primären) Aminoalkyl-Rest mit jeweils 1 bis 12, vorzugsweise 2 bis 4, Kohlenstoffatomen steht, wobei im Falle der substituierten Alkylreste zwischen dem Stickstoffatom des heterocyclischen Rings und dem Substituenten mindestens 2 Kohlenstoffatome angeordnet sind, mit der Maßgabe, daß im Falle von X = H A für $-NR_4-$ steht.

Besonders bevorzugte "blockierte Amine" B) sind Monooxazolane bzw. Monooxazane der Formel

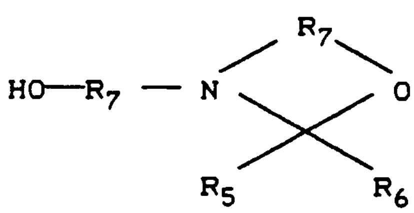

in welcher

$R_5$ und $R_6$ die bereits genannte Bedeutung bzw. bevorzugte Bedeutung haben und

$R_7$ für jeweils gleiche Alkylenreste mit 2 bis 6, vorzugsweise 2 bis 4, Kohlenstoffatomen stehen, mit der Maßgabe, daß zwischen dem Stickstoffatom und den beiden Sauerstoffatomen jeweils mindestens 2, vorzugsweise 2 oder 3, Kohlenstoffatome angeordnet sind.

Die Herstellung der als erfindungsgemäße Aufbaukomponente B) besonders geeigneten Monooxazolane bzw. Monooxazane der zuletzt genannten allgemeinen Formel gelingt in an sich bekannter Weise durch Umsetzung von entsprechenden Aldehyden bzw. Ketonen der Formel

$$\genfrac{}{}{0pt}{}{R_6}{R_5}\rangle C = O$$

die vorzugsweise ein Molekulargewicht von 72 bis 200 (Ketone) bzw. von 58 bis 128 (Aldehyde) aufweisen, mit geeigneten Hydroxyaminen der nachstehend näher genannten Art.

Geeignete Aldehyde sind beispielsweise Acetaldehyd, Propionaldehyd, Butyraldehyd, Isobutyraldehyd, Trimethylacetaldehyd, 2,2-Dimethylpropanal, 2-Ethylhexanal, Hexanal, Heptanal, Octanal, Valeraldehyd, Benzaldehyd, Tetrahydrobenzaldehyd, Hexahydrobenzaldehyd, Propargylaldehyd, p-Toluylaldehyd, Phenylethanal, 2-Methylpentanal, 3-Methylpentanal, 4-Methylpentanal, Sorbinaldehyd.

Besonders bevorzugt sind dabei Butyraldehyd, Isobutyraldehyd, Trimethylacetaldehyd, 2,2-Dimethylpropanal, 2-Ethylhexanal und Hexahydrobenzaldehyd.

Geeignete Ketone sind beispielsweise Aceton, Methylethylketon, Methylpropylketon, Methylisopropylketon, Methylbutylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Cyclopentanon, Methylcyclohexanon, Isophoron, Methyl-tert.-butylketon, 5-Methyl-3-heptanon, 4-Heptylketon, 1-Phenyl-2-propanon, Acetophenon, Methylnonylketon, Dinonylketon, 3,3,5-Trimethylcyclohexanon.

Besonders geeignete Ketone sind:
Cyclopentanon, Cyclohexanon, Methylcyclopentanon, Methylcyclohexanon, 3,3,5-Trimethylcyclohexanon, Cyclobutanon, Methylcyclobutanon, Aceton, Methylethylketon, Methylisobutylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Monooxazolane bzw. Monooxazane zum Einsatz gelangenden Hydroxyaminen handelt es sich insbesondere um organische Verbindungen, die mindestens eine aliphatische Aminogruppe und mindestens eine aliphatisch gebundene Hydroxylgruppe aufweisen. Die Verwendung von solchen Hydroxyaminen, die aromatisch oder cycloaliphatisch gebundene Amino- oder Hydroxylgruppen aufweisen, ist zwar ebenfalls möglich, jedoch weniger bevorzugt. Die Hydroxyamine weisen im allgemeinen ein zwischen 61 und 500, vorzugsweise zwischen 61 und 300, liegendes Molekulargewicht auf.

Geeignete Hydroxyamine können z. B. seien: Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-(Hexylamino)-ethanol, 2-(Cyclohexylamino)-ethanol, 2-Amino-2-methyl-1-propanol, 2-Amino-2-ethyl-1-propanol, 2-Amino-2-propyl-1-propanol, 2-Amino-2-methyl-1,3-propandiol, 2-Amino-3-methyl-3-hydroxybutan, Aminoethanol.

Ganz besonders bevorzugt sind: Bis-(2-hydroxyethyl)-amin, Bis-(2-hydroxypropyl)-amin, Bis-(2-hydroxybutyl)-amin, Bis-(3-hydroxyl)-amin, 2-(Methylamino)-ethanol, 2-(Ethylamino)ethanol, 2-Amino-2-methyl-1-propanol und 2-Amino-2-ethyl-1-propanol.

Die Herstellung der Monooxazolane bzw. Monooxazane erfolgt durch Umsetzung der Ausgangskomponenten, wobei im allgemeinen die Mengenverhältnisse der Reaktionspartner so gewählt werden, daß die Hydroxyamine, bezogen auf die Carbonylgruppen der Aldehyde bzw. Ketone, bezüglich der Oxazolanbildung in 0,5 bis 1,5-fach äquivalenten Mengen vorliegen. Gegebenenfalls können zur Reaktionsbeschleunigung katalytische Mengen von sauren Substanzen wie beispielsweise p-Toluolsolfonsäure, Chlorwasserstoff, Schwefelsäure oder Aluminiumchlorid mitverwendet werden.

Die Herstellung von blockierten Aminen B), die einen Mercaptoalkyl- bzw. Aminoalkyl-Rest X und/oder eine Gruppierung -A- mit der Bedeutung -S- bzw. $-NR_4-$ aufweisen, gelingt in weitgehend analoger Reaktion unter Verwendung entsprechender Reaktionspartner für die Aldehyde bzw. Ketone, beispielsweise unter Verwendung von N,N"-Dimethyldiethylentriamin, N,N"-Dimethyldipropylentriamin, Umsetzungsprodukten von Mercaptoethanolamin mit Monoepoxiden wie z.B. Ethylenoxid, Propylenoxid, Epoxybutan, Glycidylester der Versaticsäure, Umsetzungsprodukten von Hydroxypropylamin bzw. Hydroxyethylamin mit Thiiran, Umsetzungsprodukten von N-Methylethylendiamin bzw N-Methylpropylendiamin mit Monoepoxiden bzw. mit Thiiran, wobei diese Verbindungen ebenfalls vorzugsweise mit den Aldehyden bzw. Ketonen in äquivalenten Mengen umgesetzt werden.

Alle Umsetzungen erfolgen im allgemeinen innerhalb des Temperaturbereichs von 60 bis 180 °C, wobei die Reaktion in Gegenwart eines Schleppmittels zur Entfernung des Reaktionswassers so lange durchgeführt wird, bis die berechnete Menge an Wasser abgespalten ist bzw. bis kein Wasser mehr abgespalten wird. Anschließend werden Schleppmittel und gegebenenfalls vorliegende, nicht umgesetzte Ausgangsmaterialien destillativ abgetrennt. Geeignete Schleppmittel sind z. B. Toluol, Xylol, Cyclohexan, Octan, Isooctan. Die so erhaltenen Rohprodukte können ohne weitere Reinigungsschritte als Modifizierungsreagenz zur Herstellung der Einbrennbindemittel verwendet werden.

Zur Durchführung der ersten Stufe des erfindungsgemäßen Verfahrens werden die Polyanhydride A) in Substanz oder in Form von Lösungen in geeigneten, inerten Lösungsmitteln eingesetzt. "Inerte Lösungsmittel" sind hierbei solche Lösungsmittel, die unter den Reaktionsbedingungen des erfindungsgemäßen Verfahrens gegenüber den Reaktionspartnern und gegenüber den Reaktionsprodukten inert sind.

Bei den Lösungsmitteln kann es sich um die gleichen Lösungsmittel handeln, die auch bei der Herstellung der Polyanhydride, d. h. der Anhydridgruppen aufweisenden Copolymerisate eingesetzt worden sind. Falls Lösungsmittel mitverwendet werden, handelt es sich vorzugsweise um solche, die im Anschluß oder während der zweiten Stufe des erfindungsgemäßen Verfahrens destillativ, beispielsweise zusammen mit Wasser durch eine Azeotropdestillation aus dem Reaktionsgemisch entfernt werden können. Die gegebenenfalls zum Einsatz gelangenden Lösungen der Polyanhydride A) weisen im allgemeinen einen Feststoffgehalt von mindestens 40 Gew.-%, vorzugsweise mindestens 65 Gew.-%, auf.

Bei der Durchführung der ersten Stufe des erfindungsgemäßen Verfahrens kommen die Reaktionspartner in solchen Mengen zum Einsatz, die einem Mol-Verhältnis von Säureanhydridgruppen der Komponente A) zu gegenüber Säureanhydridgruppen reaktionsfähigen Gruppen der Komponente B) von 10 : 1 bis 0,8 : 1, vorzugsweise 2 : 1 bis 1 : 1, entsprechen. Die Umsetzung während der ersten Stufe des erfindungsgemäßen Verfahrens erfolgt im allgemeinen innerhalb des Temperaturbereichs von 30 bis 120 °C, vorzugsweise von 50 bis 90 °C, während eines Zeitraums von 1 Minute bis 24 Stunden, vorzugsweise von 5 Minuten bis 2 Stunden, unter Ausschluß von Feuchtigkeit. Dabei werden die Anhydridgruppen mindestens teilweise durch Reaktion mit den reaktiven Gruppen der blockierten Amine B) unter Ringöffnung des Anhydridrings umgesetzt.

Im Anschluß an die erste Stufe des erfindungsgemäßen Verfahrens wird das dabei anfallende Reaktionsgemisch zur Durchführung der zweiten Stufe des erfindungsgemäßen Verfahrens mit Wasser verdünnt und vorzugsweise bei 40 bis 95 °C so lange gerührt, bis eine stabile wäßrige Lösung oder Dispersion des resultierenden selbstvernetzenden Bindemittels entsteht. Vorzugsweise wird gleichzeitig das sich abspaltende flüchtige Blockierungsmittel (Aldehyd bzw. Keton), sowie das gegebenenfalls vorhandene organische Lösungsmittel, gegebenenfalls zusammen mit Wasser (Azeotrop) abdestilliert. Durch weitere Wasserzugabe kann dann die wäßrige Lösung bzw. Dispersion auf eine gebrauchsfertige Viskosität verdünnt werden.

Im allgemeinen wird die Gesamtmenge des verwendeten Wassers so gewählt, daß letztendlich 20 bis 45 gew-%ige Lösungen oder Dispersionen der Bindemittel resultieren.

In den auf diese Weise erhaltenen wäßrigen Lösungen oder Dispersionen liegen bei erhöhten Temperaturen selbstvernetzende Bindemittel vor, die durch

a) einen Gehalt an Ester-, Thioester- oder Amidgruppen, vorzugsweise Estergruppen, von bis zu 500, vorzugsweise 50 bis 200, Milliäquivalenten pro 100 g Feststoff,

b) einen Gehalt an Carboxylatgruppen von 10 bis 500, vorzugsweise 25 bis 200, Milliäquivalenten pro 100 g Feststoff und

c) einen Gehalt an Ammoniumgruppen von 10 bis 500, vorzugsweise 25 bis 200, Milliäquivalenten pro 100 g Feststoff

gekennzeichnet sind.

Im allgemeinen entspricht der Gehalt der Bindemittel an Carboxylatgruppen dem Gehalt an gleichzeitig vorliegenden Ammoniumgruppen. Außer den unter a) bis c) genannten, die Bindemittel kennzeichnenden Gruppen können in den Bindemitteln noch freie, d. h. nicht neutralisierte Carboxylgruppen oder freie, d. h. nicht neutralisierte Aminogruppen, vorliegen. Außerdem enthalten die Bindemittel im allgemein noch chemisch gebundene Hydroxylgruppen, die bei der hydrolytischen Ringöffnung der Oxazolane bzw. Oxazane entstehen.

In Abhängigkeit von der Reaktivität der Ausgangsverbindungen, der Reaktionstemperatur und der Reaktionsdauer ist die Umsetzung der Ausgangsmaterialien während der ersten Stufe des erfindungsgemäßen Verfahrens mehr oder weniger vollständig. Dies bedeutet, daß es durchaus möglich ist, daß die Umsetzung zwischen Säureanhydridgruppen der Ausgangskomponente A) und gegenüber Säureanhydridgruppen reaktionsfähigen Gruppen der Komponente B) zum Zeitpunkt der Wasserzugabe zwecks Durchführung der zweiten Stufe des erfindungsgemäßen Verfahrens nicht in jedem Fall völlig abgeschlossen ist, was jedoch bezüglich der Verwendbarkeit der erfindungsgemäßen Verfahrensprodukte weitgehend irrelevant ist. Im Falle einer derartigen unvollständigen Umsetzung entstehen letztendlich als erfindungsgemäße Bindemittel solche, in denen neben covalent (über Carbonsäureester-, Carbonsäurethioester- und/oder Carbonsäureamidgruppen) gebundenen Ammoniumgruppen freie Ammoniumgruppen (erhalten durch Neutralisation der nach hydrolytischer Ringöffnung der blockierten Polyamine B) vorliegenden sekundären

Aminogruppen durch aus den Säureanhydridgruppen gebildeten Carboxylgruppen) vorliegen. Die gemachten Angaben bezüglich des Gehalts an Ammoniumgruppen umfassen sowohl die freien als auch die covalent gebundenen Ammoniumgruppen. Dieser Gesamtgehalt an Ammoniumgruppen entspricht seinerseits im allgemeinen dem Gehalt an chemisch eingebauten Carboxylatgruppen. Auch die freien, Ammoniumgruppen aufweisenden Bestandteile der wäßrigen Lösungen oder Dispersionen werden bei der Hitzevernetzung der aus den Lösungen bzw. Dispersionen hergestellten Flächengebilde in diese chemisch eingebaut, so daß bei der Hitzevernetzung der erfindungsgemäßen Bindemittel auch bei unvollständiger Umsetzung während der ersten Stufe des erfindungsgemäßen Verfahrens keine flüchtigen Spaltprodukte abgespalten werden.

Die erfindungsgemäßen wäßrigen Bindemittel sind somit frei von flüchtigen Neutralisationsmitteln und enthalten nur noch geringe Mengen, bevorzugt keine organischen Lösemittel. Sie enthalten keine zusätzlichen Emulgier- bzw. Dispergierhilfsmittel und können ohne Zusatz von vernetzend wirkenden Substanzen bei erhöhten Temperaturen abspalterfrei ausgehärtet werden.

Den erfindungsgemäßen Bindemitteln können gegebenenfalls aus der Lacktechnologie übliche Hilfs- und Zusatzmittel der nachstehend beispielhaft genannten Art zugesetzt werden.

Obwohl es sich bei den erfindungsgemäßen, in Wasser gelöst oder dispergiert vorliegenden Bindemitteln um selbstvernetzende Systeme handelt, kann es angezeigt sein, den wäßrigen Lösungen oder Dispersionen aus der Lacktechnologie an sich bekannte Vernetzerharze zuzusetzen, um bestimmte anwendungstechnische Eigenschaften zu optimieren. So gestattet beispielsweise der Zusatz von Vernetzerharzen eine Erniedrigung der Einbrenntemperaturen und/oder eine Verkürzung der Einbrennzeiten bzw. die Herstellung von Lackfilmen einer erhöhten Vernetzungsdichte und damit einhergehender Erhöhung der Härte und Lösungsmittelresistenz.

Als Vernetzerharze eignen sich beispielsweise Amid- und Amin-Formaldehydharze, Phenolharze, Aldehyd- und Ketonharze wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, Polyepoxide wie sie in "Lackkunstharze" H. Wagner, H. F. Sarx, Carl Hanser Verlag München, 1971, beschrieben sind.

Gut geeignet als Vernetzerharz sind auch blockierte Polyisocyanate, beispielsweise auf Basis von Isophorondiisocyanat, Hexamethylendiisocyanat, 1,4-Diisocyanatocyclohexan, Bis-(4-isocyanato-cyclohexyl)-methan, 1,3-Diisocyanatobenzol, 1,4-Diisocyanato-2-methylbenzol, 1,3-Bisisocyanatomethylbenzol, 2,4-Bisisocyanatomethyl-1,5-dimethylbenzol, Bis-(4-isocyanatophenyl)-propan, Tris-(4-isocyanatophenyl)-methan, Trimethyl-1,6-diisocyanathexan oder auf Basis von Lackpolyisocanaten wie Biuretgruppen aufweisenden Polyisocyanaten auf Basis von 1,6-Diisocyanatohexan, Isocyanuratgruppen aufweisenden Polyisocyanaten auf Basis von 1,6-Diisocyanatohexan oder Urethangruppen aufweisenden Lackpolyisocyanaten auf Basis von 2,4-und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Lactame wie $\epsilon$-Caprolactam oder Phenole.

Die beispielhaft genannten Vernetzerharze werden, falls überhaupt, in Mengen von bis zu 35 Gew.-%, bezogen auf das Gewicht der Vernetzerharz-freien Bindemittel eingesetzt.

Die unter Verwendung der erfindungsgemäßen Bindemittel hergestellten Lacke können als weitere Zusatzmittel z.B. übliche Pigmente und Füllstoffe, die sowohl organischer als auch anorganischer Natur sein können, in Mengen von 30 bis 180 %, bezogen auf Bindemittel-Feststoff, enthalten, z. B. Titandioxide, Eisenoxide, Bleioxide, Zinkoxide, Chromoxide, Cadmiumsulfide, Chromate, Sulfate, Silikate von Calcium, Magnesium, Barium, Strontium und Aluminium, Ruß, Talkum, Graphit, Manganphosphat, Zinksulfid, Azofarbstoffe, Phthalocyaninkomplexe, Chinacridone, Anthrachinone, Thioindigofarbstoffe und dergleichen sowie Mischungen dieser und anderer Pigmente.

Übliche Zusatzstoffe wie Antioxidantien, Verlaufshilfsmittel, Antischaummittel, UV-Absorber, Antiabsetzmittel usw. können ebenfalls mitverwendet werden.

Die applikationsfähigen Lacke haben üblicherweise Gesamt-Festgehalte von 30 bis 65 % und zeichnen sich durch einen niedrigen Anteil, d. h. ≦ 10 %, bevorzugt ≦ 5 %, bsonders bevorzugt keine flüchtigen organischen Substanzen, aus.

Die die erfindungsgemäßen Bindemittel enthaltenden Beschichtungsmittel weisen eine ausgezeichnete Lagerstabilität auf. Selbst bei 3-monatiger Lagerung bei 40 °C sind keinerlei Abbauerscheinungen festzustellen.

Die erfindungsgemäßen Bindemittel eignen sich insbesondere zur Herstellung von Klar- und Decklacken, jedoch ebenfalls für dickschichtigen Beschichtungen und Klebstoffen.

Die erfindungsgemäßen Systeme eignen sich insbesondere zur Beschichtung hitzeresistenter Substrate, wobei der Auftrag der Systeme nach den üblichen Verfahren wie z.B. Spritzen, Tauchen, Walzen, Streichen oder Gießen erfolgen kann. Geeignete Substrate sind gegebenenfalls vorbehandelte Materialien wie Metall, Glas, Holz, Kunststoff, Pappe, Keramik oder Papier. Die erfindungsgemäßen Bindemittel eignen sich auch zur Herstellung von Druckfarben für Textilien oder zur Herstellung von Imprägnier- oder Verfestigungsmaterialien für Pappe oder Leder.

Die Einbrenntemperaturen der erfindungsgemäßen Systeme betragen im allgemeinen 110° bis 180°C, im Falle der Vernetzerharz-freien Systemen 130° bis 180°C bei Einbrennzeiten von 5 bis 30 Minuten. Vor dem Einbrennen der Beschichtungen erweist sich oftmals eine Ablüftzeit 5 bis 20 Minuten als günstig. Die erfindungsgemäßen Bindemittel härten unter den genannten Einbrennbedingungen zu wasser- und lösungsmittelresistenten Filmen aus.

In den nachfolgenden Beispielen beziehen sich alle Prozentangaben auf Gewichtsprozente.

## Beispiele

### A) Polyanhydridvorstufen

Alle Polyanhydride wurden unter $N_2$-Atmosphäre hergestellt

$A_1$) In ein 4-l-Reaktionsgefäß mit Rühr-, Kühl- und Heizvorrichtung werden 367 g Solvent Naphta (Aromatengemisch, Siedebereich 165 bis 180°C) eingewogen und auf 160°C aufgeheizt. Eine Mischung aus 500 g Styrol, 1.000 g n-Butylacrylat, 200 g Maleinsäureanhydrid und 300 g 2-Ethylhexylmethacrylat wird während 4 Stunden und parallel dazu 80 g Di-tert.-butylperoxid während 4 1/2 Stunden zudosiert. Die Reaktionstemperatur sinkt dabei auf 140°C ab. Anschließend wird noch 3 Stunden bei 140°C gerührt. Man erhält ein 85 %iges Polyanhydrid $A_1$) mit einem Äquivalentgewicht von 1.020 g/Mol (100 %ig).

$A_2$) In einem 4-l-Reaktionsgefäß mit Rühr-, Kühl- und Heizvorrichtung werden 486 g Dimethyldiglykol eingewogen und auf 130°C aufgeheizt. Eine Mischung aus 400 g Styrol, 900 g n-Butylacrylat, 600 g Methylmethacrylat und 100 g Maleinsäureanhydrid wird während 4 Stunden und parallel dazu 114,3 g tert.-Butylperoktoat (70 %ig in einem Kohlenwasserstoffgemisch) während 5 Stunden zudosiert. Anschließend wird noch 1 Stunde bei 130°C gerührt. Man erhält ein 80 %iges Polyanhydrid $A_2$) mit einem Äquivalentgewicht von 2.039 g/Mol (100 %ig).

$A_3$) In ein 4-l-Reaktionsgefäß mit Rühr-, Kühl- und Heizvorrichtung werden 486 g Xylol eingewogen und auf 128°C erwärmt. Eine Mischung aus 400 g Methylmethacrylat, 900 g n-Butylacrylat, 400 g Styrol und 300 g Maleinsäureanhydrid wird während 4 Stunden und parallel dazu 114,3 g tert.-Butylperoktoat (70 %ig in einem Kohlenwasserstoffgemisch) während 5 Stunden zudosiert. Anschließend wird noch 1 Stunde bei 130°C gerührt. Man erhält ein 80 %iges Polyanhydrid $A_4$) mit einem Äquivalentgewicht von 679 g/Mol (100 %ig).

$A_4$) In ein 5-l-Reaktionsgefäß mit Rühr-, Kühl- und Heizvorrichtung werden 850 g Xylol eingewogen und auf 130°C aufgeheizt. Eine Mischung aus 1.225 g Methylmethacrylat, 1.400 g n-Butylacrylat, 525 g Styrol und 350 g Maleinsäureanhydrid wird während 4 Stunden und 200 g tert.-Butylperoktoat (70 %ig in Kohlenwasserstoffgemisch) parallel dazu in 5 Stunden zudosiert. Anschließend wird noch 1 Stunde bei 130°C gerührt. Man erhält ein 80 %iges Polyanhydrid $A_4$) mit einem Äquivalentgewicht von 1.020 g/Mol (100 %ig).

$A_5$) In ein 2-l-Reaktionsgefäß mit Rühr-, Kühl- und Heizvorrichtung werden 419 g Polyöl 110 (Polybutadien von Hüls AG, $M_w$ 1.500 bis 1.800), 82 g Maleinsäureanhydrid, 2,1 g Kupfersoligen (10 % in Xylol), 0,2 g Acetylaceton eingewogen, in 2 Stunden auf 190°C erhitzt und 6 Stunden bei 190°C gerührt. Nach Abkühlen auf 140°C werden 169 g Styrol, 2 g Di-tert.-butylperoxid und 0,7 g n-Dodecylmercaptan zugegeben und die Reaktionsmischung so lange bei 140°C gerührt bis der Festgehalt > 97 % beträgt. Man erhält ein annähernd 100 %iges Polyanhydrid $A_5$) mit einem Äquivalentgewicht von 800 g/Mol (100 %ig).

### B) Blockierte Aminogruppen enthaltende Modifizierungsreagenzien

$B_1$) In ein 3-l-Reaktionsgefäß mit Rühr-, Kühl- und Heizvorrichtung werden 1.000 g Diisopropanolamin und 515 g Isooctan eingewogen und unter Rühren 1.058 g 2-Ethylhexanal zudosiert. Anschließend wird am Wasserabscheider so lange erhitzt, bis kein Reaktionswasser mehr abgespalten wird.

(Theoretische Wassermengen: 135 g, gefunden: 136 g). Anschließend wird im Wasserstrahlvakuum überschüssiges 2-Ethylhexanal und Isooctan abdestilliert. Man erhält das Oxazolan-Modifizierungsreagenz $B_1$) mit einem Äquivalentgewicht von 243 g/Mol.

$B_2$) Nach den gleichen Bedingungen wie bei $B_1$) beschrieben, werden 1.058 g Diethanolamin und 1.078 g Cyclohexanon in 534 g Isooktan zu dem Oxazolan-Modifizierungsreagenz $B_2$) mit einem Äquivalentgewicht von 185 g/Mol umgesetzt (theoretische Wassermenge: 172 g, gefunden: 163 g).

$B_3$) Nach den gleichen Bedingungen wie bei $B_1$) beschrieben, werden 1.050 g Diethanolamin und 792 g Isobutyraldehyd in 460 g Cyclohexan zu dem rohen etwa 90 %igen Oxazolan-Modifizierungsreagenz $B_3$) mit einem Äquivalentgewicht von 159 g/Mol (100 %ig) umgesetzt (theoretische Wassermenge: 180 g, gefunden: 175 g).

Herstellung der Bindemittel

Bei allen Beispielen (mit Ausnahme der Beispiele 3 und 6) werden Polyanhydrid und Modifizierungsreagenz in annähernd äquivalenten Mengen eingesetzt (Molverhältnis Säureanhydridgruppen : Hydroxylgruppen = 1 : 1).

Beispiel 1

In ein 3-l-Reaktionsgefäß mit Rühr-, Kühl- und Heizvorrichtung werden 900 g des 80 %iges Polyanhydrids $A_4$) eingewogen und auf 60 °C erwärmt. Nach Zugabe von 121,5 g des 90 %igen Modifizierungsreagenz $B_3$) wird die Reaktionsmischung 15 Minuten lang gerührt und dann mit 1.087 g Wasser, welches vorher auf 50 °C erwärmt wurde, versetzt. Die Reaktionsmischung wird weitere 2 Stunden bei 50 bis 60 °C gerührt, dann auf 90 °C aufgeheizt und 5 Stunden bei 90 °C gerührt, wobei das Blockierungsreagenz und das Xylol gegen Reaktionsende azeotrop mit Wasser aus dem Reaktionsgemisch entfernt werden. Nach Verdünnen mit Wasser auf einen Festgehalt von 33 % erhält man das wäßrige, selbstvernetzende Bindemittel 1), welches weder flüchtige Neutralisationsmittel, noch Abspalter oder organische Lösemittel enthält. Das Bindemittel enthält, jeweils bezogen auf 100 g Feststoff, maximal 83 Milliäquivalente an Estergruppen, 83 Milliäquivalente an Carboxylatgruppen und 83 Milliäquivalente an Ammoniumgruppen.

Beispiel 2

Das Bindemittel 2) wird wie Bindemittel 1) aus Polyanhydrid $A_4$) und Modifizierungsreagenz $B_3$) hergestellt, mit dem Unterschied, daß Polyanhydrid und Modifizierungsreagenz vor der Zugabe des Wassers für 60 Minuten bei 80 °C gerührt werden. Das Bindemittel enthält, jeweils bezogen auf 100 g Feststoff, maximal 83 Milliäquivalente an Estergruppen, 83 Milliäquivalente an Carboxylatgruppen und 83 Milliäquivalente an Ammoniumgruppen.

Beispiel 3

In ein 3-l-Reaktionsgefäß mit Rühr-, Kühl- und Heizvorrichtung werden 900 g des 85 %igen Polyanhydrids $A_1$) eingewogen und auf 70 °C aufgeheizt. Dann werden 119,4 g des 90 %igen Modifizierungsreagenzes $B_3$) auf einmal zugegeben und die Reaktionsmischung 15 Minuten homogenisiert. Anschließend werden 1.507 g Wasser zugegeben und die Reaktionsmischung 2 Stunden bei 60 bis 70 °C gehalten. Anschließend wird auf Rückflußtemperatur erhitzt und Blockierungsreagenz und Lösemittel azeotrop mit Wasser abdestilliert.

Nach 6 Stunden wird durch Zugabe von Wasser die Dispersion auf einen Festkörper von 30 % eingestellt. Man erhält das wäßrige, selbstvernetzende Bindemittel 3), welches weder flüchtige Neutralisationsmittel noch Abspalter oder organische Lösemittel enthält. Das Bindemittel enthält, jeweils bezogen auf 100 g Feststoff, maximal 78 Milliäquivalente an Estergruppen, 78 Milliäquivalente an Carboxylatgruppen und 78 Milliäquivalente an Ammoniumgruppen. Pro Anhydridäquivalent wurden 0,9 Äquivalente Modifizierungsreagenz eingesetzt.

Beispiel 4

Nach dem bei Beispiel 3) beschriebenen Verfahren werden 600 g Polyanhydrid $A_1$) und 121,6 g Modifizierungsreagenz $B_1$) sowie 1.082 g Wasser zur Reaktion gebracht. Man erhält das wäßrige, selbstvernetzende Bindemittel 4) als etwa 30 %ige wäßrige Dispersion bzw. Lösung. Das Bindemittel enthält, jeweils bezogen auf 100 g Feststoff, maximal 79 Milliäquivalente an Estergruppen, 79 Milliäquivalente an Carboxylatgruppen und 79 Milliäquivalente an Ammoniumgruppen.

Beispiel 5

Nach dem bei Beispiel 3) beschriebenen Verfahren werden 600 g Polyanhydrid $A_1$) und 92,6 g Modifizierungsreagenz $B_2$) sowie 1.030 g Wasser zur Reaktion gebracht. Man erhält das wäßrige, selbstvernetzende Bindemittel 5) mit einem Festgehalt von etwa 30 %. Das Bindemittel enthält, jeweils bezogen auf 100 g Feststoff, maximal 83 Milliäquivalente an Estergruppen, 83 Milliäquivalente an Carboxylatgruppen und 83 Milliäquivalente an Ammoniumgruppen.

Beispiel 6

Das Bindemittel 6) wird nach dem im Beispiel 1) beschriebenen Verfahren hergestellt, mit dem Unterschied, daß pro Anhydridäquivalent Polyanhydrid $A_4$) nur 2/3 Äquivalente Modifizierungsreagenz $B_3$) zugegeben werden. Man erhält das wäßrige, selbstvernetzende Bindemittel 6) mit einem Festgehalt von 33 %. Das Bindemittel enthält, jeweils bezogen auf 100 g Feststoff, maximal 55 Milliäquivalente an Estergruppen, 55 Milliäquivalente an Carboxylatgruppen und 55 Milliäquivalente an Ammoniumgruppen.

Beispiel 7

Wie in Beispiel 1) beschrieben, jedoch unter 3-stündigem Erhitzen auf 80°C vor der Wasserzugabe, werden 900 g Polyanhydrid $A_2$), 62,4 g Modifizierungsreagenz $B_3$) sowie 1.273 g Wasser zur Reaktion gebracht. Man erhält selbstvernetzende, wäßrige Bindemittel 7) mit einem Festgehalt von 36 %. Das Bindemittel enthält, jeweils bezogen auf 100 g Feststoff, maximal 45 Milliäquivalente an Estergruppen, 45 Milliäquivalente an Carboxylatgruppen und 45 Milliäquivalente an Ammoniumgruppen.

Beispiel 8

Wie in Beispiel 1) beschrieben, werden 900 g Polyanhydrid $A_3$), 187 g Modifizierungsreagenz $B_3$) sowie 1.504 g Wasser zur Reaktion gebracht. Man erhält das wäßrige, selbstvernetzende Bindemittel 8) mit einem Festgehalt von etwa 31 %. Das Bindemittel enthält, jeweils bezogen auf 100 g Feststoff, maximal 119 Milliäquivalente an Estergruppen, 119 Milliäquivalente an Carboxylatgruppen und 119 Milliäquivalente an Ammoniumgruppen.

Beispiel 9

Wie in Beispiel 1) beschrieben, werden 670 g Polyanhydrid $A_5$), 142,5 g Modifizierungsreagenz $B_3$ sowie 1.550 g Wasser zur Reaktion gebracht. Man erhält das wäßrige, selbstvernetzende Bindemittel 9) mit einem Festgehalt von etwa 34 %. Das Bindemittel enthält, jeweils bezogen auf 100 g Feststoff, maximal 101 Milliäquivalente an Estergruppen, 101 Milliäquivalente an Carboxylatgruppen und 101 Milliäquivalente an Ammoniumgruppen.

Vergleichsbeispiel

Das Vergleichsbeispiel wird entsprechend Beispiel 1) hergestellt mit dem Unterschied, daß 600 g Polyanhydrid $A_4$) mit 54,8 g Diethanolamin und dann 800 g Wasser zur Reaktion gebracht werden. Man erhält eine wäßrige Harzlösung mit einem Festgehalt von 35 %.

Die in den Beispielen 1 bis 9 enthaltenen selbstvernetzenden Bindemittel werden zusammen mit dem Vergleich auf Glasplatten mit einer Naßfilmstärke von 210 µm appliziert und nach 15-minütigem Ablüften bei Raumtemperatur 30 Minuten bei 140 bis 150°C eingebrannt. Man erhält klare, vernetzte Überzüge mit ausgezeichneten Wasser- und Lösemittelresistenz.

Die Wasserfestigkeit wurde durch Auflegen eines mit Wasser getränkten Wattebausches bestimmt. Die Lösemittelfestigkeit wurde durch einen Wischtest mit einem acetongetränkten Wattebausch ermittelt, angegeben ist die Anzahl der Doppelhübe ohne sichtbare Filmveränderung.

| Beispiel | Einbrennbedingungen | Wasserfestigkeit | Lösemittelfestigkeit |
|---|---|---|---|
| 1 | 30'/150 °C | >3 Tg.o.B.* | 300 o.B. |
| 2 | 30'/150 °C | >3 Tg.o.B. | 300 o.B. |
| 3 | 30'/140 °C | >3 Tg.o.B. | 200 o.B. |
| 4 | 30'/150 °C | >3 Tg.o.B. | 200 o.B. |
| 5 | 30'/140 °C | >3 Tg.o.B. | 200 o.B. |
| 6 | 30'/150 °C | >3 Tg.o.B. | 300 o.B. |
| 7 | 30'/140 °C | >3 Tg.o.B. | 300 o.B. |
| 8 | 30'/140 °C | >3 Tg.o.B. | 300 o.B. |
| 9 | 30'/150 °C | >2 Tg.o.B. | 300 o.B. |
| Vergl. | 30'/150 °C | 1 Tag trübe | 30 abgelöst |

* Tg. o.B. = Tage ohne Befund

Beispiele 10 bis 19 (Verwendungsbeispiele unter Mitverwendung von Vernetzerharzen)

Die gemäß Beispielen 1, 4, 5 und 7 hergestellten, wäßrigen Bindemitteln werden im Gewichtverhältnis Bindemittel:Vernetzerharz 80:20 (jeweils 100 %ig) mit dem nachstehend genannten Vernetzerharzen abgemischt, auf Verarbeitungsviskosität (ca. 100 mPa.s) eingestellt, auf Glasplatten mit einer Naßfilmstärke von 210 µm appliziert und nach 15-minütigem Ablüften bei Raumtemperatur 30 Minuten eingebrannt. Man erhält klare, vernetzte Überzüge mit ausgezeichneter Lösungsmittelresistenz und Wasserfestigkeit (Bestimmung dieser Eigenschaften wie vorstehend beschrieben).

| Bsp. | Bindemittel gem. Beispiel | Vernetzerharz | Einbrenntemperatur | Lösemittelfestigkeit | Wasserfestigkeit |
|---|---|---|---|---|---|
| 10 | 1 | ®Sacopal M 232 | 130° C | 200 o.B. | > 2 Tg. o.B. |
| 11 | 4 | ®Cymel 327 | 130° C | 200 o.B. | > 2 Tg. o.B. |
| 12 | 4 | ®Sacopal B 421 | 130° C | 200 o.B. | > 2 Tg. o.B. |
| 13 | 4 | ®Sacopal M 232 | 130° C | 200 o.B. | > 2 Tg. o.B. |
| 14 | 4 | ®Sacopal M 244 | 130° C | 200 o.B. | > 2 Tg. o.B. |
| 15 | 5 | ®Cymel 327 | 120° C | 200 o.B. | > 2 Tg. o.B. |
| 15 | 5 | ®Sacopal B 421 | 120° C | 200 o.B. | > 2 Tg. o.B. |
| 17 | 5 | ®Sacopal M 232 | 120° C | 200 o.B. | > 2 Tg. o.B. |
| 18 | 5 | ®Sacopal M 244 | 110° C | 200 o.B. | > 2 Tg. o.B. |
| 19 | 7 | ®Sacopal M 232 | 130° C | 200 o.B. | > 2 Tg. o.B. |

®Cymel 327 : Melaminformaldehydharz, American Cyanamid
®Sacopal B 421: Harnstoffharz, Krems Chemie
®Sacopal M 244: Melaminharz, Krems Chemie
®Sacopal M 232: Melaminharz, Krems Chemie

## Patentansprüche

1. Wäßrige Lösungen oder Dispersionen von selbstvernetzenden Bindemitteln auf Basis von ionisch modifizierten Polycarbonsäure – Polyanhydriden, dadurch gekennzeichnet, daß die in Wasser gelöst oder dispergiert vorliegenden Bindemittel

a) einen Gehalt an seitenständig angeordneten Carbonsäureester-, Carbonsäurethioester- und/oder Carbonsäureamidgruppen von bis zu 500 Milliäquivalenten pro 100 g Feststoff,

b) einen Gehalt an chemisch eingebauten, covalent gebunden Carboxylatgruppen von 10 bis 500 Milliäquivalenten pro 100 g Feststoff

und

c) einen Gehalt an Ammoniumgruppen von 10 bis 500 Milliäquivalenten pro 100 g Feststoff

aufweisen.

**2.** Wäßrige Lösungen oder Dispersionen von selbstvernetzenden Bindemitteln gemäß Anspruch 1, dadurch gekennzeichnet, daß sie bis zu 35 Gew.-%, bezogen auf das Gewicht der selbstvernetzenden Bindemittel, an Vernetzerharzen, sowie gegebenenfalls weitere aus der Lacktechnologie übliche Hilfs- und Zusatzmittel enthalten.

**3.** Verfahren zur Herstellung von wäßrigen Lösungen oder Dispersionen von selbstvernetzenden Bindemitteln gemäß Anspruch 1, dadurch gekennzeichnet, daß man
in einem ersten Reaktionsschritt intramolekulare Carbonsäureanhydridgruppen aufweisende Polyanhydride A), gegebenenfalls in Gegenwart von inerten Lösungsmitteln, mit, unter dem Einfluß von wasseraktivierbaren, blockierten Aminen B), die neben den blockierten Aminogruppen mindestens eine gegenüber Säureanhydridgruppen reaktionsfähige Hydroxy-, Mercapto- oder Aminogruppe aufweisen, unter Einhaltung eines Molverhältnisses von Säureanhydridgruppen zu gegenüber Säureanhydridgruppen reaktionsfähigen Gruppen von 10 : 1 bis 0,8 : 1 im Sinne einer unter Ringöffnung ablaufenden Ester-, Thioester- oder Amidbildungsreaktion zumindest teilweise zur Reaktion bringt
und
in einem zweiten Reaktionsschritt das so erhaltene Reaktionsgemisch mit Wasser verdünnt und bei Raumtemperatur bzw. gegebenenfalls erhöhter Temperatur so lange rührt, bis eine stabile wäßrige Lösung oder Dispersion entsteht, wobei gegebenenfalls vorliegende flüchtige organische Bestandteile des Gemisches gegebenenfalls gleichzeitig abdestilliert werden.

**4.** Verfahren gemäß Anspruch 3, dadurch gekennzeichnet, daß die Polyanhydride A) anhydridfunktionelle Copolymerisate des Molekulargewichtsbereichs $M_w$ von 1.500 bis 200.000 darstellen und durch Copolymerisation von

a) 0,1 bis 45 Gew.-Teilen Maleinsäureanhydrid,

b) 0 bis 95 Gew.-Teilen Monomeren der Formel

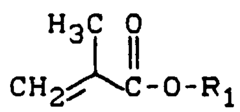

und/oder der Formel

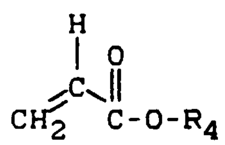

c) 0 bis 95 Gew.-Teilen Monomeren der Formel

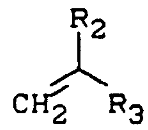

d) 0 bis 10 Gew. – Teilen mehrfach ungesättigten copolymerisierbaren Verbindungen,

erhalten worden sind, wobei in den genannten Formeln

$R_1$ für einen aliphatischen oder cycloaliphatischen, gegebenenfalls Sauerstoff, Schwefel oder Stickstoff als Heteroatom enthaltenden Kohlenwasserstoffrest mit 1 bis 12 Kohlenstoffatomen steht,

$R_2$ für Wasserstoff, eine Methyl – oder Ethylgruppe oder für Chlor oder Fluor steht,

$R_3$ für einen aliphatischen Kohlenwasserstoffrest mit 2 bis 15 Kohlenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, Chlor, Fluor, eine Nitrilgruppe oder einen Kohlenwasserstoffrest mit 2 bis 18 Kohlenstoffatomen, der ein oder mehrere Heteroatome aus der Gruppe bestehend aus Sauerstoff, Schwefel und Stickstoff in Form von Ether –, Ester –, Amid –, Urethan –, Harnstoff –, Thioester –, Thioether –, Oxiran –, Keton –, Lactam – oder Lactongruppen enthält, steht, und

$R_4$ bezüglich seiner Bedeutung der für $R_1$ gemachten Definition entspricht.

**5.** Verfahren gemäß Anspruch 3 und 4, dadurch gekennzeichnet, daß man als blockierte Amine B) Verbindungen der Formel

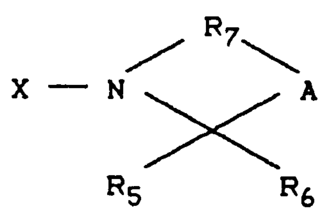

verwendet, wobei

X für Wasserstoff oder einen Hydroxyalkyl –, Mercaptoalkyl – oder Aminoalkyl – Rest mit jeweils 1 bis 12 Kohlenstoffatomen steht,

A für – O –, – S – oder – $NR_4$ – ($R_4$ = $C_1$ – $C_6$ – Alkyl) steht,

$R_5$ und $R_6$ für gleiche oder verschiedene Reste stehen und Wasserstoff oder Alkyl – Reste mit 1 bis 18 Kohlenstoffatomen bedeuten oder wobei $R_5$ und $R_6$ zusammen mit dem Kohlenstoffatom des heterocyclischen Rings einen cycloaliphatischen Kohlenwasserstoffrest mit insgesamt 4 bis 9 Kohlenstoffatomen bilden, mit der Maßgabe, daß höchstens einer der Reste $R_5$ oder $R_6$ für Wasserstoff steht, und

$R_7$ für einen Alkylenrest mit 2 bis 6 Kohlenstoffatomen steht, mit der Maßgabe, daß zwischen dem Stickstoffatom und A) mindestens zwei Kohlenstoffatome angeordnet sind.

**6.** Verfahren gemäß Anspruch 3 bis 5, dadurch gekennzeichnet, daß man als blockierte Amine B) Verbindungen der Formel

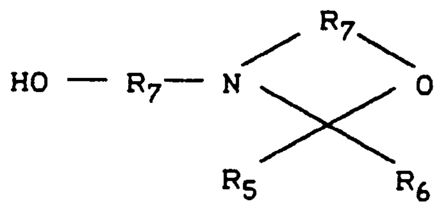

verwendet, wobei

| | |
|---|---|
| $R_5$ und $R_6$ | die in Anspruch 5 genannte Bedeutung haben und |
| $R_7$ | jeweils für gleiche Alkylenreste mit 2 bis 4 Kohlenstoffatomen steht, mit der Maßgabe, daß zwischen dem Stickstoffatom und den Sauerstoffatomen jeweils mindestens 2 Kohlenstoffatome angeordnet sind. |

**7.** Verwendung der wäßrigen Lösungen oder Dispersionen gemäß Anspruch 1 als wäßrige Beschichtungsmittel oder Klebstoffe oder zur Herstellung von wäßrigen Beschichtungsmitteln oder Klebstoffen.

**Claims**

**1.** Aqueous solutions or dispersions of self-crosslinking binders based on ionically modified polycarboxylic acid polyanhydrides, characterized in that the binders dissolved or dispersed in water have

a) a content of lateral carboxylic acid ester, carboxylic acid thioester and/or carboxylic acid amide groups of up to 500 milliequivalents per 100 g solids,

b) a content of chemically incorporated carboxylate groups of 10 to 500 milliequivalents per 100 g solids and

c) a content of ammonium groups of 10 to 500 milliequivalents per 100 g solids.

**2.** Aqueous solutions or dispersions of self-crosslinking binders as claimed in claim 1, characterized in that they contain up to 35% by weight, based on the weight of the self-crosslinking binders, of crosslinking resins and, optionally, other auxiliaries and additives known from paint technology.

**3.** A process for the production of the aqueous solutions or dispersions of self-crosslinking binders claimed in claim 1, characterized in that

in a first reaction step, polyanhydrides A) containing intramolecular carboxylic anhydride groups are at least partly reacted, optionally in the presence of inert solvents, with blocked amines B) which can be activated by water and which, in addition to the blocked amino groups, contain at least one anhydride-reactive hydroxy, mercapto or amino group, in a molar ratio of anhydride groups to anhydride-reactive groups of 10:1 to 0.8:1 in an ester-, thioester- or amide-forming reaction accompanied by ring opening and

in a second reaction step, the reaction mixture thus obtained is diluted with water and stirred at room temperature or, optionally, elevated temperature until a stable aqueous solution or dispersion is formed, any volatile organic constituents present in the mixture optionally being distilled off at the same time.

**4.** A process as claimed in claim 3, characterized in that the polyanhydrides A) are anhydride-functional copolymers having a molecular weight $M_w$ in the range from 1,500 to 200,000 which have been obtained by copolymerization of

a) 0.1 to 45 parts by weight maleic anhydride,

b) 0 to 95 parts by weight monomers corresponding to the following formula

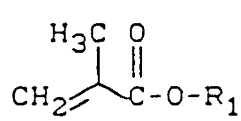

and/or to the following formula

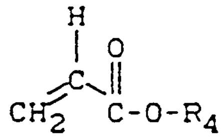

c) 0 to 95 parts by weight monomers corresponding to the following formula

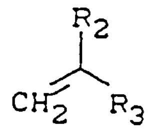

d) 0 to 10 parts by weight polyunsaturated copolymerizable compounds;

in the above formulae:

$R_1$ is an aliphatic or cycloaliphatic $C_{1-12}$ hydrocarbon radical optionally containing oxygen, sulfur or nitrogen as heteroatom,

$R_2$ is hydrogen, a methyl or ethyl group or chlorine or fluorine,

$R_3$ is an aliphatic $C_{2-15}$ hydrocarbon radical, a cycloaliphatic $C_{5-10}$ hydrocarbon radical, an araliphatic $C_{7-18}$ hydrocarbon radical, an aromatic $C_{6-12}$ hydrocarbon radical, chlorine, fluorine, a nitrile group or a $C_{2-18}$ hydrocarbon radical which contains one or more heteroatoms from the group consisting of oxygen, sulfur and nitrogen in the form of ether, ester, amide, urethane, urea, thioester, thioether, oxirane, ketone, lactam or lactone groups, and

$R_4$ corresponds in its meaning to the definition given for $R_1$.

**5.** A process as claimed in claims 3 and 4, characterized in that the blocked amines B) used are compounds corresponding to the following formula

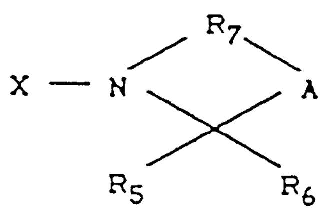

in which

X is hydrogen or a $C_{1-12}$ hydroxyalkyl, mercaptoalkyl or aminoalkyl radical,

A represents $-O-$, $-S-$ or $-NR_4-$ ($R_4$ = $C_{1-6}$ alkyl),

$R_5$ and $R_6$ may be the same or different and represent hydrogen or $C_{1-18}$ alkyl radicals or $R_5$ and $R_6$ together with the carbon atom of the heterocyclic ring form a cycloaliphatic hydrocarbon radical containing a total of 4 to 9 carbon atoms, with the proviso that at most one of the substituents $R_5$ or $R_6$ is hydrogen, and

$R_7$ is a $C_{2-6}$ alkylene radical, with the proviso that at least two carbon atoms are arranged between the nitrogen atom and A).

**6.** A process as claimed in claims 3 to 5, characterized in that the blocked amines B) used are compounds corresponding to the following formula

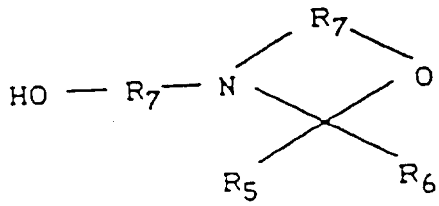

in which

$R_5$ and $R_6$ are as defined in claim 5 and the

$R_7$'s are the same and represent $C_{2-4}$ alkylene radicals, with the proviso that at least two carbon atoms are arranged between the nitrogen atom and the oxygen atoms.

**7.** The use of the aqueous solutions or dispersions claimed in claim 1 as aqueous coating compositions or adhesives or for the production of aqueous coating compositions or adhesives.

**Revendications**

**1.** Solutions ou dispersions aqueuses de liants autoréticulables à base de polyanhydrides d'acides polycarboxyliques modifiés ioniquement, caractérisées en ce que les liants se trouvant en solution ou en dispersion dans l'eau présentent

a) une teneur en groupes ester d'acide carboxylique, thioester d'acide carboxylique et/ou amide d'acide carboxylique à disposition latérale allant jusqu'à 500 milli-équivalents par 100 g de matière solide,

b) une teneur en groupes carboxylate liés par covalence, incorporés chimiquement, de 10 à 500 milliéquivalents par 100 g de matière solide

et

c) une teneur en groupes ammonium de 10 à 500 milliéquivalents par 100 g de matière solide.

**2.** Solutions ou dispersions aqueuses de liants autoréticulables suivant la revendication 1, caractérisées en ce qu'elles contiennent jusqu'à 35 % en poids, par rapport au poids des liants autoréticulables, de résines de réticulation, ainsi que, le cas échéant, d'autres substances auxiliaires et additifs d'emploi classique dans la technologie des peintures.

**3.** Procédé de préparation de solutions ou dispersions aqueuses de liants autoréticulables suivant la revendication 1, caractérisé en ce que

dans une première étape réactionnelle, on fait réagir au moins partiellement des polyanhydrides A) portant des groupes anhydride d'acide carboxylique intramoléculaires, le cas échéant en présence de solvants inertes, avec des amines B) protégées, activables sous l'influence de l'eau, qui présentent à côté des groupes amino protégés au moins un groupe hydroxy, mercapto ou amino apte à réagir vis-à-vis de groupes anhydride d'acide, en observant un rapport molaire des groupes anhydride d'acide aux groupes aptes à réagir vis-à-vis de groupes anhydride d'acide de 10:1 à 0,8:1, dans le sens d'une réaction de formation d'un ester, d'un thioester ou d'un amide s'effectuant avec ouverture du noyau et

dans une seconde étape réactionnelle, on dilue avec de l'eau le mélange réactionnel ainsi obtenu et on l'agite à la température ambiante ou, le cas échéant, à une température élevée jusqu'à ce que soit produite une solution ou dispersion aqueuse stable, en chassant en même temps éventuellement par distillation les constituants organiques volatils du mélange qui sont présents, le cas échéant.

**4.** Procédé suivant la revendication 3, caractérisé en ce que les polyanhydrides A) constituent des copolymères à fonctionnalité anhydride de poids moléculaire moyen $M_p$ compris dans la plage de 1500 à 200 000 et ont été obtenus par copolymérisation

a) de 0,5 à 45 parties en poids d'anhydride d'acide maléique

b) de 0 à 95 parties en poids de monomères de formule

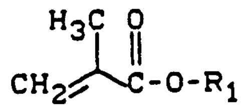

et/ou de formule

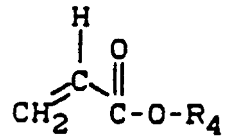

c) 0 à 95 parties en poids de monomères de formule

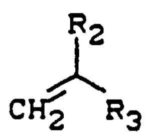

d) de 0 à 10 parties en poids de composés copolymérisables polyinsaturés,

formules dans lesquelles

R $_1$ représente un reste d'hydrocarbure aliphatique ou cycloaliphatique contenant éventuellement de l'oxygène, du soufre ou de l'azote comme hétéro-atome et ayant 1 à 12 atomes de carbone,

$R_2$ représente l'hydrogène, un groupe méthyle ou éthyle, ou du chlore ou du fluor,

$R_3$ est un reste d'hydrocarbure aliphatique ayant 2 à 15 atomes de carbone, un reste d'hydrocarbure cycloaliphatique ayant 5 à 10 atomes de carbone, un reste d'hydrocarbure araliphatique ayant 7 à 18 atomes de carbone, un reste d'hydrocarbure aromatique ayant 6 à 12 atomes de carbone, du chlore, du fluor, un groupe nitrile ou un reste d'hydrocarbure ayant 2 à 18 atomes de carbone, qui contient un ou plusieurs hétéro-atomes du groupe constitué de l'oxygène, du soufre et de l'azote sous forme de groupes éther, ester, amide, uréthanne, urée, thioester, thioéther, oxiranne, cétone, lactame ou lactone, et

$R_4$ correspond, quant à sa définition, à celle qui a été donnée pour $R_1$.

**5.** Procédé suivant les revendications 3 et 4, caractérisé en ce qu'on utilise comme amines protégées B) des composés de formule

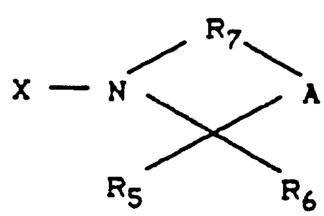

dans laquelle

X représente l'oxygène ou un reste hydroxyalkyle, mercaptoalkyle ou aminoalkyle, chacun ayant 1 à 12 atomes de carbone,

A représente $-O-$, $-S-$ ou $-NR_4-$ ($R_4$ = alkyle en $C_1$ à $C_6$),

$R_5$ et $R_6$ sont des restes identiques ou différents et représentent l'hydrogène ou des restes alkyle ayant 1 à 18 atomes de carbone, ou bien $R_5$ et $R_6$ forment conjointement avec

l'atome de carbone du noyau hétérocyclique un reste d'hydrocarbure cycloaliphatique ayant au total 4 à 9 atomes de carbone, sous réserve qu'au maximum l'un des restes $R_5$ ou $R_6$ représente l'hydrogène, et

$R_7$ est un reste alkylène ayant 2 à 6 atomes de carbone, sous réserve qu'au moins deux atomes de carbone soient disposés entre l'atome d'azote et A).

**6.** Procédé suivant les revendications 3 à 5, caractérisé en ce qu'on utilise comme amines protégées B) des composés de formule

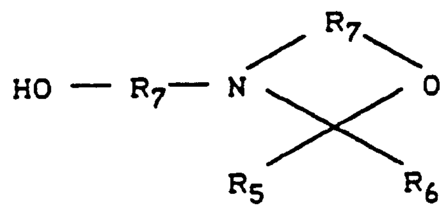

dans laquelle

$R_5$ et $R_6$ ont la définition indiquée dans la revendication 5 et

$R_7$ représente dans chaque cas des restes alkylène identiques ayant 2 à 4 atomes de carbone, sous réserve qu'il y ait à chaque cas au moins 2 atomes de carbone entre l'atome d'azote et les atomes d'oxygène.

**7.** Utilisation des solutions ou dispersions aqueuses suivant la revendication 1 comme compositions aqueuses de revêtement ou comme adhésifs aqueux, ou pour la production de compositions aqueuses de revêtement ou d'adhésifs aqueux.